# FASCICULE DE BREVET EUROPEEN

(11) **EP 3 938 638 B1**
(45) Date de publication et mention de la délivrance du brevet: **22.02.2023**
(21) Numéro de dépôt: 20725830.2
(22) Date de dépôt: 05.03.2020
(51) Int. Cl.: F02C 7/275, F01D 15/10, F02C 9/28, F02C 9/48, F02K 5/00

(54) **PROCÉDÉ DE RÉGULATION DE LA TEMPÉRATURE DES GAZ D'ÉCHAPPEMENT D'UNE TURBOMACHINE**
VERFAHREN ZUR REGELUNG DER TEMPERATUR DER ABGASE EINER TURBOMASCHINE
METHOD FOR REGULATING THE TEMPERATURE OF THE EXHAUST GASES OF A TURBOMACHINE

(30) Priorité: 15.03.2019 FR 1902699
(43) Date de publication de la demande: 19.01.2022
(73) Titulaire: SAFRAN AIRCRAFT ENGINES, 75015 Paris (FR)
(72) Inventeur: CUVILLIER, Romain, Guillaume, 77550 MOISSY-CRAMAYEL (FR); CABRERA, Pierre, 77550 MOISSY-CRAMAYEL (FR)
(74) Mandataire: Cabinet Beau de Loménie
(86) Numéro de dépôt international: PCT/FR2020/050444
(87) Numéro de publication internationale: WO 2020/188177

(56) Documents cités:
- EP-A1- 3 236 051
- EP-A2- 1 990 519
- US-A1- 2011 302 927
- US-A1- 2018 283 274

## Description

### Domaine Technique

La présente invention se rapporte au domaine général des turbomachines pour aéronef.

### Technique antérieure

Actuellement, lors du décollage d'un aéronef qui comprend une turbomachine qui est froide, par exemple lors du premier cycle de la turbomachine de la journée, une turbomachine actuelle peut rencontrer un pic de température des gaz d'échappement.

En effet, lorsque la turbomachine atteint sa poussée de décollage, la température d'échappement des gaz peut atteindre un pic de température, ce qui contribue à détériorer la turbomachine. En outre, afin de prendre en compte ce phénomène, une marge est prévue entre la température maximum à ne pas dépasser et la température de dimensionnement à laquelle la turbomachine est prévue pour fonctionner, cette marge impactant négativement le rendement de la turbomachine.

En outre, ce phénomène de pic de température des gaz d'échappement se produit à chaque cycle, mais est d'autant plus important lorsque la turbomachine est froide.

On connait EP 1 990 519 qui divulgue une méthode de fonctionnement d'un moteur à turbine à gaz et US 2018 283274 qui divulgue un volant d'inertie (« flywheel ») mécanique utilisé dans un système d'aéronef.

### Exposé de l'invention

La présente invention a donc pour but principal de fournir une solution répondant au problème décrit précédemment.

Selon un premier aspect, l'invention concerne un procédé de régulation d'une température des gaz d'échappement d'une turbomachine, le procédé comprenant les étapes suivantes :
- régulation de l'injection de carburant dans une chambre de combustion de la turbomachine pour que la turbomachine génère une poussée cible ;
- régulation de l'injection de puissance mécanique par un moteur électrique sur un arbre entrainé en rotation par une turbine, le moteur électrique étant activé lorsqu'un jeu entre un carter et des aubes de la turbine dépasse une valeur seuil.

La Demanderesse s'est en effet aperçue que la surchauffe de la turbomachine est provoquée par un phénomène d'ouverture temporaire du jeu au sommet des aubes de la turbine, et notamment de la turbine haute pression. L'ouverture du jeu se produit à cause d'une différence de dilatation thermique entre le carter et les aubes de la turbine. En effet, le carter de la turbine possède une inertie thermique qui est généralement plus faible que l'inertie thermique des disques de la turbine. Cette augmentation du jeu entre le carter et le sommet des aubes de la turbine impacte négativement le rendement de la turbine, entrainant ainsi une augmentation de la consommation de carburant, l'augmentation de la consommation de carburant provoquant l'augmentation de la température des gaz d'échappement de la turbomachine, à poussée donnée.

De manière avantageuse, l'invention concerne un procédé de régulation de la température des gaz d'échappement de la turbomachine d'un aéronef pour une phase de décollage dudit aéronef.

Selon une caractéristique possible, la régulation de l'injection de puissance mécanique par le moteur électrique est réalisée en déterminant une température de gaz d'échappement de la turbomachine, le moteur électrique injectant de la puissance mécanique sur l'arbre entrainé en rotation par la turbine lorsque la température des gaz d'échappement de la turbomachine atteint une valeur seuil prédéterminée.

Selon une caractéristique possible, l'injection de puissance mécanique sur l'arbre entrainée en rotation par la turbine est variable en fonction du dépassement de la température des gaz d'échappement de la turbomachine par rapport à la valeur seuil prédéterminée. Ainsi, l'injection de puissance mécanique peut être d'autant plus importante que la température des gaz d'échappement de la turbomachine dépasse la valeur seuil prédéterminée.

Selon une caractéristique possible, la température des gaz d'échappement de la turbomachine est déterminée à partir de l'injection de carburant dans la chambre de combustion.

Selon une caractéristique possible, la température des gaz d'échappement de la turbomachine est déterminée par mesure avec un capteur.

Selon une caractéristique possible, la régulation de l'injection de puissance mécanique par le moteur électrique est réalisée en déterminant le jeu entre le carter et les aubes de la turbine, le moteur électrique injectant de la puissance mécanique sur l'arbre entrainé en rotation par la turbine lorsque le jeu entre le carter et les aubes de la turbine atteint la valeur seuil.

Selon une caractéristique possible, l'injection de puissance mécanique sur l'arbre entrainée en rotation par la turbine est variable en fonction du dépassement du jeu entre le carter et les aubes de turbine par rapport à la valeur seuil. Ainsi, l'injection de puissance mécanique peut être d'autant plus importante que le jeu entre le carter et les aubes de la turbine dépasse la valeur seuil.

Selon une caractéristique possible, le jeu entre le carter et les aubes de la turbine est déterminé par mesure avec un capteur.

Selon une caractéristique possible, le jeu entre le carter et les aubes de la turbine est déterminé à partir d'un modèle construit à partir de paramètres moteur mesurés par le système de contrôle. Ainsi, selon une caractéristique possible, le jeu entre le carter et les aubes de la turbine est déterminé à partir d'une température d'une température de l'air dans la turbine (la température de la veine) et d'une température du carter de la turbine.

Selon une autre caractéristique possible, le jeu entre le carter et les aubes de la turbine est déterminé à partir d'une température du carter de la turbine et d'une température d'un disque de la turbine.

Selon une caractéristique possible, la régulation de l'injection de puissance mécanique par le moteur électrique est réalisée en mesurant la poussée générée par la turbomachine, le moteur électrique injectant de la puissance mécanique sur l'arbre entrainé en rotation par la turbine lorsque la poussée générée par la turbomachine atteint une valeur seuil.

Selon une caractéristique possible, le moteur électrique est activé pendant une durée comprise entre 100 secondes et 400 secondes.

Selon un deuxième aspect, l'invention concerne une turbomachine pour aéronef comprenant :
- une turbine qui est située en aval d'une chambre de combustion et qui est reliée à un arbre, la turbine comprenant un carter et une pluralité d'aubes ;
- un dispositif d'injection de carburant qui est configuré pour injecter du carburant dans la chambre de combustion ;
- un dispositif de calcul de poussée qui est configuré pour calculer la poussée générée par la turbomachine ;
- un moteur électrique qui est relié à l'arbre ;
- un système de contrôle relié au dispositif de calcul de poussée, au dispositif d'injection de carburant et au moteur électrique, le système de contrôle étant configuré pour mettre en oeuvre le procédé selon l'une quelconque des caractéristiques précédentes.

Selon une caractéristique possible, la turbomachine est à double corps et à double flux, la turbine étant une turbine haute pression et l'arbre étant un arbre haute pression.

Selon un troisième aspect, l'invention concerne un aéronef comprenant une turbomachine selon l'une quelconque des caractéristiques précédentes.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente schématiquement une turbomachine pour aéronef.
[Fig. 2] La figure 2 représente une comparaison de l'évolution de la température des gaz d'échappement d'une turbomachine de l'état de la technique et d'une turbomachine selon l'invention.

### Description des modes de réalisation

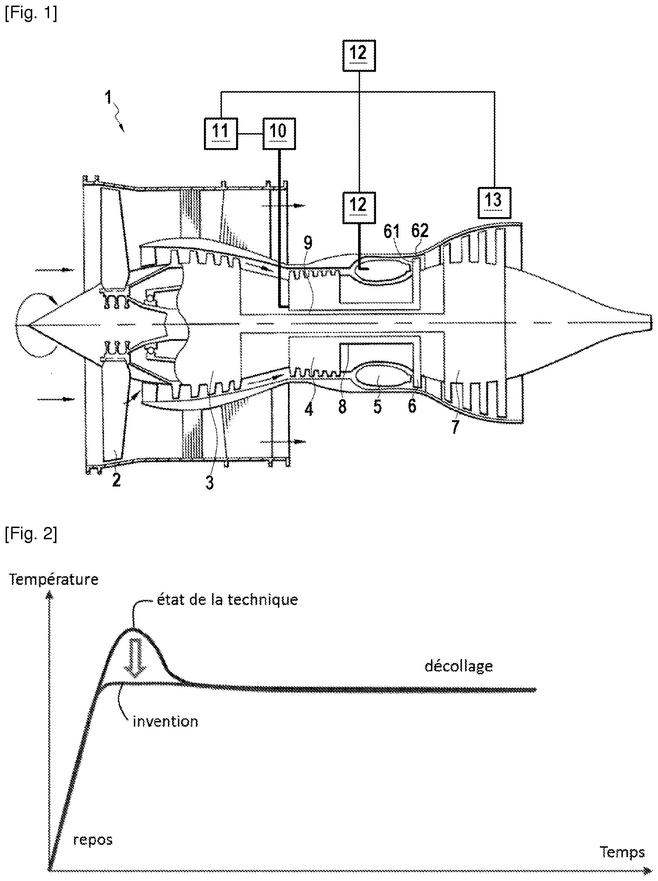

La figure 1 illustre schématiquement une turbomachine 1 d'aéronef à double corps et double flux comprenant, de l'amont vers l'aval, dans le sens d'écoulement du flux d'air, une soufflante 2, un compresseur basse pression (BP) 3, un compresseur haute pression (HP) 4, une chambre de combustion 5, une turbine haute pression (HP) 6, et une turbine basse pression (BP) 7. Toutefois, l'invention peut s'appliquer sur une turbomachine possédant une structure différente.

La turbine haute pression 6 est reliée au compresseur haute pression 4 par un arbre haute pression 8, et la turbine basse pression 7 est reliée au compresseur basse pression 3 et à la soufflante 2 par un arbre basse pression 9.

La turbine haute pression 6 comprend une pluralité d'aubes 61 qui sont entourées par un carter 62. Les aubes 61 comprennent un sommet qui est situé en regard du carter 62, le sommet des aubes 61 étant espacé dudit carter 62 par un jeu.

La turbomachine 1 comprend également un moteur électrique 10 qui est relié à l'arbre haute pression 8, le moteur électrique 10 permettant d'entrainer en rotation ledit arbre haute pression 8. Le moteur électrique 10 peut par exemple être disposé dans le boîtier d'accessoires (AGB ou « *accessory gearbox* » selon la terminologie anglo-saxonne) de la turbomachine 1. Le moteur électrique 10 peut par exemple être alimenté par une batterie 11.

La turbomachine 1 comprend un dispositif d'injection de carburant 12 qui permet d'injecter le carburant dans la chambre de combustion 5. Le dispositif d'injection de carburant 12 peut notamment comprendre une pompe qui est reliée à un réservoir de carburant.

La turbomachine 1 comprend également un dispositif de calcul de poussée 13 qui est configuré pour calculer la poussée que génère la turbomachine 1 durant son fonctionnement. La poussée générée par la turbomachine 1 peut par exemple être calculée à partir de la vitesse de rotation de la soufflante 2, de la pression totale en amont de la turbomachine 1, de la température totale en amont de la turbomachine 1, et de la différence de température de l'air extérieur et l'atmosphère standard (ISA, pour « *International Standard Atmosphère* »). La poussée générée par la turbomachine 1 peut également être calculée à partir de la pression de l'air dans la soufflante 2 et la pression de l'air dans la turbine basse pression 7. Ainsi, le dispositif de calcul de poussée 13 peut comprendre une pluralité de capteurs répartis sur la turbomachine 1 ou sur l'aéronef afin de mesurer les grandeurs physiques permettant de calculer la poussée générée par l'aéronef.

La turbomachine 1 comprend un système de contrôle 14 qui est relié au moteur électrique 10, au dispositif d'injection de carburant 12, et au dispositif de calcul de poussée 13. Le système de contrôle 14 peut également être relié à la batterie 11. Le système de contrôle 14 assure ainsi le contrôle du moteur électrique 10 et du dispositif d'injection de carburant 12, et le système de contrôle 14 acquiert la poussée calculée par le dispositif de calcul de poussée 13. Selon une variante possible, la puissance électrique nécessaire au fonctionnement du moteur électrique est fournie par une source électrique qui est situé dans l'aéronef, et donc hors de la turbomachine 1. Cette source électrique dans l'aéronef peut par exemple être comprendre le groupe auxiliaire de puissance (APU, pour « Auxiliary Power Unit » selon la terminologie anglo-saxonne).

Le système de contrôle 14 est configuré pour mettre en oeuvre un procédé de régulation d'une température des gaz d'échappement de la turbomachine 1. Pour ce faire, le système de contrôle 14 peut comprendre d'une part une mémoire sur laquelle le procédé est enregistré, et d'autre part un processeur afin d'exécuter le procédé enregistré sur la mémoire.

Le procédé de régulation de la température des gaz d'échappement de la turbomachine 1 comprend les étapes suivantes :
- régulation de l'injection de carburant dans la chambre de combustion 12 de sorte que la turbomachine 1 génère une poussé cible ;
- régulation de l'injection de puissance mécanique par le moteur électrique 10 sur l'arbre haute pression 8, le moteur électrique 10 étant activé lorsque le jeu entre le sommet des aubes 61 et le carter 62 dépasse une valeur seuil. La valeur seuil du jeu peut par exemple être de 0,6 mm.

Les étapes du procédé sont réalisées simultanément.

La Demanderesse s'est en effet rendu compte que, du fait que le jeu entre les aubes 61 et le carter 62 soit trop important, et qu'ainsi le rendement de la turbine haute pression 6 diminue, il est préférable d'injecter de la puissance mécanique via le moteur électrique 10 plutôt que d'injecter d'avantage de carburant dans la chambre de combustion 5 pour compenser la perte de rendement.

Le procédé de régulation est particulièrement avantageux pour la phase de décollage de l'aéronef, et encore plus particulièrement lors du premier démarrage de la turbomachine de la journée. La valeur de poussée cible peut ainsi être égale à la poussée de décollage.

L'injection de puissance mécanique par le moteur électrique 10 peut être réalisée pendant une durée comprise entre 100 secondes et 400 secondes, ou bien comprise entre 100 secondes et 300 secondes, ou bien comprise entre 200 secondes et 300 secondes. La Demanderesse s'est en effet rend compte que le jeu entre le carter 62 et les aubes 61 tend à s'ouvrir pendant une durée pouvant généralement atteindre 400 secondes, l'ouverture du jeu atteignant un pic au début et diminuant progressivement par la suite.

Un tel procédé peut être mis en oeuvre selon trois variantes possibles.

Selon une première variante possible, le fait que le jeu entre les aubes 61 et le carter 62 soit supérieur à la valeur seuil est détecté en utilisant la température des gaz d'échappement de la turbomachine 1 (température EGT, pour « *exhaust gas temperature* »). La Demanderesse s'est en effet aperçue du lien entre la température des gaz d'échappement de la turbomachine 1 et le jeu entre les aubes 61 et le carter 62, une température des gaz d'échappement de la turbomachine 1 trop importante étant due à la surconsommation de carburant provoquée par l'augmentation du jeu entre les aubes 61 et le carter 62.

Ainsi, selon la première variante, la régulation de l'injection de puissance mécanique par le moteur électrique 10 est réalisée par le système de contrôle 14 en déterminant la température de gaz d'échappement de la turbomachine 1, le système de contrôle 14 commandant l'injection de la puissance mécanique par le moteur électrique 10 sur l'arbre haute pression 8 lorsque la température des gaz d'échappement de la turbomachine 1 atteint une valeur seuil prédéterminée. La régulation du moteur électrique 10 par le système de contrôle 14 est réalisée en boucle fermée.

La température des gaz d'échappement de la turbomachine 1 peut être déterminée à partir de l'injection de carburant dans la chambre de combustion en utilisant un modèle physique qui est rentré dans le système de contrôle et qui donne la température des gaz d'échappement en fonction du carburant injecté.

La température des gaz d'échappement de la turbomachine 1 peut également être déterminée en mesurant ladite température des gaz d'échappement avec un capteur de température situé dans le carter d'échappement de la turbomachine 1, ledit capteur de température étant relié au système de contrôle.14. Le capteur de température peut, selon une autre alternative, être situé dans un distributeur basse pression ou au niveau du distributeur basse pression. Le distributeur basse pression est formé par des aubages fixes de la turbine basse pression 7.

Selon une deuxième variante possible, la régulation effectuée par le système de contrôle 14 de l'injection de puissance mécanique par le moteur électrique 10 est réalisée en déterminant le jeu entre le carter 62 et les aubes 61 de la turbine haute pression 6, le système de contrôle 14 activant l'injection de puissance mécanique par le moteur électrique 10 sur l'arbre haute pression 8 lorsque le jeu entre le carter et les aubes de la turbine atteint la valeur seuil. La régulation du moteur électrique 10 par le système de contrôle 14 est réalisée en boucle fermée.

Le jeu entre le sommet des aubes 61 et le carter 62 peut être déterminé grâce à un capteur installé sur la turbine haute pression 6 qui mesure la distance entre le sommet des aubes 61 et le carter 62.

Le jeu entre le carter 62 et les aubes 61 peut également être déterminé à partir d'une température de l'air au niveau de la turbine haute pression 6 (la température de la veine) et de la température du carter 62, permettant ainsi de déterminer la différence de dilatation thermique entre le disque de la turbine haute pression 6 et le carter 62.

Selon une autre solution possible, le jeu entre les aubes 61 et le carter 62 peut être déterminé à partir de la température du carter 62 et de la température du disque de la turbine haute pression 6, permettant ainsi de déterminer la différence de dilatation thermique entre le disque de la turbine haute pression 6 et le carter 62.

Selon une troisième variante possible, la régulation de l'injection de puissance mécanique est effectuée en boucle ouverte, et non en boucle fermée comme cela est le cas dans la première variante et la deuxième variante. Dans la troisième variante, le système de contrôle 14 commande le moteur électrique 10 pour injecter de la puissance mécanique sur l'arbre haute pression 8 lorsque la poussée générée par la turbomachine 1 atteint une valeur seuil.

L'injection de puissance mécanique sur l'arbre haute pression 8 lorsque la poussée générée atteint une valeur seuil est réalisée selon un profil qui est prédéterminé et qui est enregistré sur le système de contrôle 14. Selon une variante avantageuse, le profil d'injection de puissance mécanique est basé pour prendre en compte le pire cas, le cas dans lequel le rendement de la turbomachine 1 est impacté négativement par l'ouverture du jeu entre le carter 62 et les aubes 61.

De manière avantageuse, le système de contrôle 14 active le moteur électrique 10 pour injecter de la puissance mécanique lorsque la poussée générer par la turbomachine 1 atteint la valeur cible, et en particulier la poussée de décollage.

La demanderesse s'est en effet aperçu que le jeu entre le carter 62 et les aubes 61 tend à augmenter en fin d'accélération de la turbomachine 1, le maximum du jeu arrivant environ 1 minute après la fin de l'accélération.

Comme cela est visible sur la figure 2 qui illustre la différence d'évolution de la température des gaz d'échappement entre une turbomachine de l'état de la technique et une turbomachine selon l'invention, l'invention permet de réduire, voire de supprimer, le pic de température des gaz de sortie de la turbomachine 1 lors du premier décollage de l'aéronef.

Dans l'exemple de réalisation décrit précédemment, le jeu surveillé est le jeu de la turbine haute pression 6 et le moteur électrique 10 injecte de la puissance mécanique sur l'arbre haute pression 8, toutefois l'invention peut également être appliquée sur la turbine basse pression 7, le moteur électrique 10 injectant de la puissance mécanique sur l'arbre basse pression 9.

## Revendications

1. Procédé de régulation d'une température des gaz d'échappement d'une turbomachine (1), le procédé comprenant les étapes suivantes :
- régulation de l'injection de carburant dans une chambre de combustion (5) de la turbomachine (1) pour que la turbomachine (1) génère une poussée cible ;
- régulation de l'injection de puissance mécanique par un moteur électrique (10) sur un arbre (8, 9) entrainé en rotation par une turbine (6, 7), le procédé étant **caractérisé en ce que** le moteur électrique (10) est activé lorsqu'un jeu entre un carter (62) et des aubes (61) de la turbine (6, 7) dépasse une valeur seuil.

2. Procédé selon la revendication 1, dans lequel la régulation de l'injection de puissance mécanique par le moteur électrique (10) est réalisée en déterminant une température de gaz d'échappement de la turbomachine (1), le moteur électrique (10) injectant de la puissance mécanique sur l'arbre (8, 9) entrainé en rotation par la turbine (6, 7) lorsque la température des gaz d'échappement de la turbomachine (1) atteint une valeur seuil prédéterminée.

3. Procédé selon la revendication 2, dans lequel la température des gaz d'échappement de la turbomachine (1) est déterminée à partir de l'injection de carburant dans la chambre de combustion (5).

4. Procédé selon la revendication 3, dans lequel la température des gaz d'échappement de la turbomachine (1) est déterminée par mesure avec un capteur.

5. Procédé selon la revendication 1, dans lequel la régulation de l'injection de puissance mécanique par le moteur électrique (10) est réalisée en déterminant le jeu entre le carter (62) et les aubes (61) de la turbine (6, 7), le moteur électrique (10) injectant de la puissance mécanique sur l'arbre (8, 9) entrainé en rotation par la turbine (6, 7) lorsque le jeu entre le carter (62) et les aubes (61) de la turbine (6, 7) atteint la valeur seuil.

6. Procédé selon la revendication 5, dans lequel le jeu entre le carter (62) et les aubes (61) de la turbine (6, 7) est déterminé par mesure avec un capteur.

7. Procédé selon la revendication 5, dans lequel le jeu entre le carter (62) et les aubes (61) de la turbine (6, 7) est déterminé à partir d'une température de l'air dans la turbine (6, 7) et d'une température du carter (62) de la turbine (6, 7).

8. Procédé selon la revendication 5, dans lequel le jeu entre le carter (62) et les aubes (61) de la turbine (6, 7) est déterminé à partir d'une température du carter (62) de la turbine (6, 7) et d'une température d'un disque de la turbine (6, 7).

9. Procédé selon la revendication 1, dans lequel la régulation de l'injection de puissance mécanique par le moteur électrique (10) est réalisée en mesurant la poussée générée par la turbomachine (1), le moteur électrique (10) injectant de la puissance mécanique sur l'arbre (8, 9) entrainé en rotation par la turbine (6, 7) lorsque la poussée générée par la turbomachine (1) atteint une valeur seuil.

10. Turbomachine (1) pour aéronef comprenant :
- une turbine (6, 7) qui est située en aval d'une chambre de combustion (5) et qui est reliée à un arbre (8, 9), la turbine (6, 7) comprenant un carter (62) et une pluralité d'aubes (61) ;
- un dispositif d'injection de carburant (12) qui est configuré pour injecter du carburant dans la chambre de combustion (5) ;
- un dispositif de calcul de poussée (13) qui est configuré pour calculer la poussée générée par la turbomachine (1) ;
- un moteur électrique (10) qui est relié à l'arbre (8, 9) ;
- un système de contrôle (12) relié au dispositif de calcul de poussée (13), au dispositif d'injection de carburant (12) et au moteur électrique (10), la turbomachine étant **caractérisée en ce que** le système de contrôle (12) est configuré pour mettre en oeuvre le procédé selon l'une quelconque des revendications 1 à 9.

11. Turbomachine (1) selon la revendication 10, dans lequel la turbomachine (1) est à double corps et à double flux, la turbine (6) étant une turbine haute pression et l'arbre (8) étant un arbre haute pression.

12. Aéronef comprenant une turbomachine (1) selon l'une quelconque des revendications 10 ou 11.

## Patentansprüche

1. Verfahren zur Reglung einer Temperatur der Abgase einer Turbomaschine (1), wobei das Verfahren die folgenden Schritte umfasst:
- Regeln der Zuführung von Treibstoff in eine Brennkammer (5) der Turbomaschine (1), damit die Turbomaschine (1) einen Zielschub erzeugt;
- Regeln der Zuführung mechanischer Leistung durch einen Elektromotor (10) auf einer Welle (8, 9), die durch eine Turbine (6, 7) drehbar angetrieben wird, wobei das Verfahren **dadurch gekennzeichnet ist, dass** der Elektromotor (10) aktiviert wird, wenn ein Spiel zwischen einem Gehäuse (62) und Schaufeln (61) der Turbine (6, 7) einen Schwellenwert überschreitet.

2. Verfahren nach Anspruch 1, wobei die Regelung der Zuführung mechanischer Leistung durch den Elektromotor (10) durch Bestimmen einer Temperatur von Abgasen der Turbomaschine (1) ausgeführt wird, wobei der Elektromotor (10) die mechanische Leistung (8, 9) auf der durch die Turbine (6, 7) drehbar angetriebenen Welle zuführt, wenn die Temperatur der Abgase der Turbomaschine (1) einen vorbestimmten Schwellenwert erreicht.

3. Verfahren nach Anspruch 2, wobei die Temperatur der Abgase der Turbomaschine (1) ausgehend von der Zuführung von Treibstoff in die Brennkammer (5) bestimmt wird.

4. Verfahren nach Anspruch 3, wobei die Temperatur der Abgase der Turbomaschine (1) durch Messung mit einem Sensor bestimmt wird.

5. Verfahren nach Anspruch 1, wobei die Regelung der Zufuhr von mechanischer Leistung durch den Elektromotor (10) durch Bestimmen des Spiels zwischen dem Gehäuse (62) und Schaufeln (61) der Turbine (6, 7) ausgeführt wird, wobei der Elektromotor (10) mechanische Leistung auf der durch die Turbine (6, 7) drehbar angetriebenen Welle (8, 9) zuführt, wenn das Spiel zwischen dem Gehäuse (62) und den Schaufeln (61) der Turbine (6, 7) den Schwellenwert erreicht.

6. Verfahren nach Anspruch 5, wobei das Spiel zwischen dem Gehäuse (62) und den Schaufeln (61) der Turbine (6, 7) durch Messung mit einem Sensor bestimmt wird.

7. Verfahren nach Anspruch 5, wobei das Spiel zwischen dem Gehäuse (62) und den Schaufeln (61) der Turbine (6, 7) ausgehend von einer Temperatur der Luft in der Turbine (6, 7) und von einer Temperatur des Gehäuses (62) der Turbine (6, 7) bestimmt wird.

8. Verfahren nach Anspruch 5, wobei das Spiel zwischen dem Gehäuse (62) und den Schaufeln (61) der Turbine (6, 7) ausgehend von einer Temperatur des Gehäuses (62) der Turbine (6, 7) und einer Temperatur einer Scheibe der Turbine (6, 7) bestimmt wird.

9. Verfahren nach Anspruch 1, wobei die Regelung der Zufuhr von mechanischer Leistung durch den Elektromotor (10) durch Messen des von der Turbomaschine (1) erzeugten Schubs ausgeführt wird, wobei der Elektromotor (10) mechanische Leistung auf der durch die Turbine (6, 7) drehbar angetriebenen Welle (8, 9) zuführt, wenn der durch die Turbomaschine (1) erzeugte Schub einen Schwellenwert erreicht.

10. Turbomaschine (1) für Luftfahrzeug, die Folgendes umfasst:
- eine Turbine (6, 7), die sich einer Brennkammer (5) nachgelagert befindet und die mit einer Welle (8, 9) verbunden ist, wobei die Turbine (6, 7) ein Gehäuse (62) und eine Vielzahl von Schaufeln (61) umfasst;
- eine Vorrichtung (12) zur Zuführung von Treibstoff, die dazu ausgestaltet ist, Treibstoff in die Brennkammer (5) zuzuführen;
- eine Vorrichtung (13) zur Berechnung des Schubs, die dazu ausgestaltet ist, den von der Turbomaschine (1) erzeugten Schub zu berechnen;
- einen Elektromotor (10), der mit der Welle (8, 9) verbunden ist;
- ein Steuersystem (12), das mit der Vorrichtung (13) zur Berechnung des Schubs, mit der Vorrichtung (12) zur Zuführung von Treibstoff und mit dem Elektromotor (10) verbunden ist, wobei die Turbomaschine **dadurch gekennzeichnet, ist, dass** das Steuersystem (12) dazu ausgestaltet ist, das Verfahren nach einem der Ansprüche 1 bis 9 durchzuführen.

11. Turbomaschine (1) nach Anspruch 10, wobei die Turbomaschine (1) eine Doppelkörper- und Doppelstrom-Turbomaschine ist, wobei die Turbine (6) eine Hochdruckturbine ist und die Welle (8) eine Hochdruckwelle ist.

12. Luftfahrzeug, das eine Turbomaschine (1) nach einem der Ansprüche 10 oder 11 umfasst.

## Claims

1. A method for regulating a temperature of the exhaust gases of a turbomachine (1), the method comprising the following steps:
- regulation of the injection of fuel into a combustion chamber (5) of the turbomachine (1) so that the turbomachine (1) generates a target thrust;
- regulation of the injection of mechanical power by an electric motor (10) onto a shaft (8, 9) driven in rotation by a turbine (6, 7), the method being **characterized in that** the electric motor (10) is activated when a clearance between a casing (62) and the blades (61) of the turbine (6, 7) exceeds a threshold value.

2. The method according to claim 1, wherein the regulation of the injection of mechanical power by the electric motor (10) is accomplished by determining a temperature of the exhaust gas of the turbomachine (1), the electric motor (10) injecting mechanical power onto the shaft (8, 9) driven in rotation by the turbine (6, 7) when the temperature of the exhaust gases of the turbomachine (1) reaches a predetermined threshold value.

3. The method according to claim 2, wherein the temperature of the exhaust gases of the turbomachine (1) is determined based on the injection of fuel into the combustion chamber (5).

4. The method according to claim 3, wherein the temperature of the exhaust gases of the turbomachine (1) is determined by measurement with a sensor.

5. The method according to claim 1, wherein the regulation of the injection of mechanical power by the electric motor (10) is accomplished by determining the clearance between the casing (62) and the blades (61) of the turbine (6, 7), the electric motor (10) injecting mechanical power onto the shaft (8, 9) driven in rotation by the turbine (6, 7) when the clearance between the casing (62) and the blades (61) of the turbine (6, 7) reaches the threshold value.

6. The method according to claim 5, wherein the clearance between the casing (62) and the blades (61) of the turbine (6, 7) is determined by measurement with a sensor.

7. The method according to claim 5, wherein the clearance between the casing (62) and the blades (61) of the turbine (6, 7) is determined based on a temperature of the air in the turbine (6, 7) and on a temperature of the casing (62) of the turbine (6, 7).

8. The method according to claim 5, wherein the clearance between the casing (62) and the blades (61) of the turbine (6, 7) is determined based on a temperature of the casing (62) of the turbine (6, 7) and on a temperature of a disk of the turbine (6, 7).

9. The method according to claim 1, wherein the regulation of the injection of mechanical power by the electric motor (10) is accomplished by measuring the thrust generated by the turbomachine (1), the electric motor (10) injecting mechanical power onto the shaft (8, 9) driven in rotation by the turbine (6, 7) when the thrust generated by the turbomachine (1) reaches a threshold value.

10. A turbomachine (1) for an aircraft comprising:
- a turbine (6, 7) which is located downstream of a combustion chamber (5) which is connected to a shaft (8, 9), the turbine (6, 7) comprising a casing (62) and a plurality of blades (61);
- a fuel injection device (12) which is configured to inject fuel into the combustion chamber (5);
- a thrust calculation device (13) which is configured to calculate the thrust generated by the turbomachine (1);
- an electric motor (10) which is connected to the shaft (8, 9);
- a control system (12) connected to the thrust calculation device (13), to the fuel injection device (12) and to the electric motor (10), the turbomachine being **characterized in that** the control system (12) is configured to implement the method according to any one of claims 1 to 9.

11. The turbomachine (1) according to claim 10, wherein the turbomachine is of the double spool, double flow type, the turbine (6) being a high-pressure turbine and the shaft (8) being a high-pressure shaft.

12. An aircraft comprising a turbomachine (1) according to any one of claims 10 or 11.
